# EUROPÄISCHE PATENTSCHRIFT

(11) **EP 2 559 602 B1**
(45) Veröffentlichungstag und Bekanntmachung des Hinweises auf die Patenterteilung: **14.10.2015**
(21) Anmeldenummer: 12175821.3
(22) Anmeldetag: 11.07.2012
(51) Int. Cl.: B61C 3/00, B61C 15/00, B61C 15/08, B61C 15/14, B60L 3/08, B61L 15/00

(54) **Verfahren und Vorrichtung zum Sperren der Traktion eines stillstehenden Schienenfahrzeugs**
Method and device for blocking the traction of a stationary rail vehicle
Procédé et dispositif destiné à bloquer la traction d'un véhicule ferroviaire arrêté

(30) Priorität: 17.08.2011 AT 11872011
(43) Veröffentlichungstag der Anmeldung: 20.02.2013
(73) Patentinhaber: Siemens AG Österreich, 1210 Wien (AT)
(72) Erfinder: Berger, Christian, 3443 Rappoltenkirchen (AT); Divisch, Karl, 2560 Berndorf (AT); Hafner, Manfred, 2542 Kottingbrunn (AT); Krizek, Kurt, 1170 Wien (AT); Prostrednik, Daniel, 2403 Wildungsmauer (AT)
(74) Vertreter: Maier, Daniel Oliver

(56) Entgegenhaltungen:
- EP-A2- 2 133 254
- WO-A2-92/15469
- US-A- 3 656 037
- US-A1- 2007 001 629

## Beschreibung

### Technisches Gebiet

Die vorliegende Erfindung betrifft ein Verfahren und eine Vorrichtung zum Sperren der Traktion eines stillstehenden Schienenfahrzeugs, welche eine Einrichtung zum Erzeugen eines Traktionssperre-Anforderungssignals, einen ersten Signalpfad, um das Traktionssperre-Anforderungssignal an eine Steuereinheit des Schienenfahrzeugs zu übermitteln, und einen zweiten Signalpfad, um das Traktionssperre-Anforderungssignal an eine Ansteuersignal-Sperrschaltung zu übermitteln, aufweist.

Ein solches Verfahren ist aus US-A1-3656037 bekannt.

### Stand der Technik

Es ist bekannt, dass in der Verkehrstechnik und damit auch bei Schienenfahrzeugen besonders hohe Sicherheitsvorkehrungen gefordert werden. So wird beim Halt eines Zuges gefordert, dass dieser sich nicht aus dem Stillstand unbeabsichtigt ruckartig zu bewegen beginnt und dadurch möglicherweise Passagiere in Gefahr bringt, welche sich gerade im Bereich des Einstiegs aufhalten. Eine solche Forderung wird mittels einer so genannten Traktionssperre realisiert, welche ebenfalls diesen hohen Anforderungen an die technische Zuverlässigkeit genügen muss: Sie muss nahezu frei von so genannten systematischen Fehlern sein. Darüber hinaus muss die Wahrscheinlichkeit eines Ausfalls der Traktionssperre unter einer definierten Grenze liegen. Heutzutage wird gefordert, dass die Ausfallwahrscheinlichkeit pro Stunde im Bereich von kleiner/gleich 10⁻⁸ bis kleiner 10⁻⁷ liegt.

Bekanntlich werden Schienenfahrzeuge meist von Elektromotoren angetrieben, welche von einem Stromrichter gespeist werden. Die Steuersignale für die Stromrichter-Antriebseinheit erzeugt ein Leitgerät des Schienenfahrzeugs, üblicherweise ein Mikrocomputer. Dabei kann nicht ausgeschlossen werden, dass dieser Mikrocomputer fehlerhaft arbeitet und dessen Software bei einem Halt in einem Bahnhof fehlerhaft Steuersignale erzeugt. Dann kann es zu einer unverhofften ruckartigen Bewegung des Schienenfahrzeugs kommen, bei der auch Passagiere des Schienenfahrzeugs Schaden nehmen können. Aus Sicherheitsgründen ist man bestrebt, eine solche unbeabsichtigt erzeugte Traktionskraft mit möglichst hoher Sicherheit zu vermeiden.

Um bei einem stillstehenden Schienenfahrzeug die ungewollte Umsetzung der Antriebskraft in einen Vor- oder Rückwärtstrieb zu unterbinden, gibt es verschiedene Lösungsansätze.

Zum einen könnte man beispielsweise fahrerseitig bei jedem Bahnhofshalt den Hauptschalter öffnen und die Energiezufuhr unterbrechen. Damit wäre ein ungewollter Antrieb mit Sicherheit ausgeschlossen, gleichzeitig fällt aber auch die Energieversorgung der Nebenaggregate weg, was nicht erwünscht ist.

Ein anderer bekannter Lösungsansatz geht von einer Stillstandüberwachung aus. Dabei wird elektronisch der Stillstand des Fahrzeugs überwacht, beispielsweise indem die Drehbewegung der Räder messtechnisch erfasst wird. Sobald eine Bewegungsänderung erkannt und diese einen kritischen Schwellwert überschritten hat, wird die Energiezufuhr unterbrochen und dadurch die unerwünschte Bewegung wieder gestoppt. Dies hat aber den Nachteil, dass ein "Ruck" des Schienenfahrzeugs erst auftreten muss, um ihn erfassen und verhindern zu können. Damit bleibt aber grundsätzlich ein Sicherheitsrisiko bestehen.

Ein anderer Lösungsansatz besteht darin, die unerwünschte Ruckbewegung elektronisch zu verhindern. Im Fachaufsatz "Quantitative Sicherheitsbewertung einer Fahrzeugsteuerung" Tagungsband ZEVrail Glasers Annalen 131 Tagungsband SFT, Graz 2007, ist eine solche elektronisch wirkende sichere Traktionssperre beschrieben. Die hohe Sicherheit SIL4 nach EN50126 dieser Traktionssperre ergibt sich u. A. dadurch, indem eine als Ansteuersignal-Sperrschaltung fungierende Torschaltung, die im Ansteuersignalpfad zwischen Steuereinheit und Stromrichter angeordnet ist, zweikanalig ausgebildet und durch Selbsttest überprüfbar ist. Der Stromrichter kann im Normalfall per Software gesperrt und frei gegeben werden. Aus Sicherheitsgründen existiert aber zusätzlich diese in Hardware ausgeführte Torschaltung (logisches UND). Sie schaltet im Falle einer notwendigen Drehmomentverhinderung zeitlich um einige Millisekunden verzögert zur Softwaresperre den Stromrichter "hart " weg. Dabei kann es auf Grund unkoordinierter Ansteuersignale zu einer Beschädigung der Halbleiterschalter im Stromrichter kommen. Eine Beschädigung der Halbleiterschalter in einem Stromrichter beeinträchtigt die Verfügbarkeit der Antriebseinheit und damit insgesamt die des Schienenfahrzeugs.

Grundsätzlich besteht ein Interesse nicht nur eine möglichst hohe Betriebssicherheit einer Traktionssperre zu erreichen, sondern auch im seltenen Fall einer notwendigen Verhinderung einer Drehmomentbildung das Abschalten des Stromrichters ohne Beschädigung von Baukomponenten durchführen zu können.

### Darstellung der Erfindung

Der vorliegenden Erfindung liegt die Aufgabe zu Grunde, ein Verfahren und eine Vorrichtung zum Sperren der Traktion eines stillstehenden Schienenfahrzeugs anzugeben, welche bei hoher Betriebssicherheit gleichzeitig auch eine hohe Verfügbarkeit aufweist.

Diese Aufgabe wird durch ein Verfahren mit den Merkmalen des Anspruchs 1 und durch eine Vorrichtung mit den Merkmalen des Anspruchs 9 gelöst. Vorteilhafte Ausgestaltungen der Erfindung sind in den jeweils abhängigen Ansprüchen definiert.

Das erfindungsgemäße Verfahren zum Sperren der Traktion eines Schienenfahrzeugs weist eine Traktionssperre auf, welche eine Ansteuersignal-Sperrschaltung beinhaltet, die in einem Ansteuersignalpfad, der eine Steuereinheit mit einer Antriebseinheit verbindet, angeordnet ist. Die Steuereinheit erzeugt in Abhängigkeit eines von einer Einrichtung erzeugten und über einen ersten Signalpfad empfangenen Traktionssperre-Anforderungssignals zu Testzwecken ein Testanforderungssignal. Dieses Testanforderungssignal wird über einen zweiten Signalpfad einerseits einer, in einem die Steuereinheit und die Ansteuersignal-Sperrschaltung verbindenden Abschnitt des Ansteuersignalpfads, angeordneten frei programmierbaren Schaltung (FPGA) zugeführt. Andererseits wird dieses Testanforderungssignal mittels eines Verzögerungsglieds zeitlich verzögert der Ansteuersignal-Sperrschaltung zugeleitet. Mittels eines Rücklesekanals wird der Signalzustand eines zwischen der Ansteuersignal-Sperrschaltung unter Antriebseinheit gelegenen Abschnitts des Ansteuersignalpfads von der Steuereinheit zurück gelesen. Die frei programmierbare Schaltung ist dabei so ausgebildet, dass bei Vorliegen eines Traktionssperre-Anforderungssignals die von der Steuereinheit erzeugten Ansteuersignale so gesperrt werden, dass die Antriebseinheit nicht beschädigt wird. Die frei programmierbare Schaltung stellt also im Falle der Funktionsüberprüfung sicher, dass Halbleiterschalter des Stromrichters in der Antriebseinheit nicht beschädigt werden. Dadurch verringert sich die Gefahr, dass durch den Test der Stromrichter Schaden nimmt und die ihm zugewiesene Aufgabe im Bedarfsfall nicht mehr erfüllen kann. Mit anderen Worten, die erfindungsgemäße Lösung hat den Vorteil, dass wenn im Zuge einer Drehmomentverhinderung der Stromrichter weg geschalten werden muss, dieser Schaltvorgang durch den FPGA-Baustein geordnet erfolgt. Geordnet bedeutet, dass Ansteuerimpulse an den Stromrichter so vom FPGA-Baustein vorgegeben werden, dass Halbleiterschalter im Stromrichter nicht zerstört werden. Dadurch kann neben einer hohen Betriebssicherheit auch eine hohe Verfügbarkeit des Systems erhalten werden. Erst dann, wenn innerhalb einer, durch ein Verzögerungsglied vorgegebenen Zeitspanne, eine Drehmomentverhinderung nicht ordnungsgemäß zum Abschluss gebracht werden kann, schaltet die Ansteuersignal-Sperrschaltung d.h. die Hardware, aus Sicherheitsgründen - auch auf die Gefahr einer Zerstörung des Stromrichters - "hart" ab. Es ist ein Vorteil der Erfindung, dass zusätzlich zu der per Software bewirkten Sperre der Erzeugung von Ansteuersignalen, eine weitere, ausschließlich durch Hardware realisierbare Sperreinrichtung greift, ohne Schaden im Stromrichter zu verursachen. Diese Hardware-Sperreinrichtung sorgt für einen geordneten, störungsfreien Sperrenvorgang des Wechselrichters und ist selbsttestbar. Vorteilhaft ist, dass in die Software des Mikrocomputers nicht eingegriffen werden braucht. Der Programmablauf im Leitgerät kann nahezu unverändert beibehalten werden. Die Hardware-Realisierung ist einfach und kostengünstig. Die sicherheitstechnische Analyse der Hardware-Sperre ist überschaubar, was den Prozess der Zulassung einer sicherheitskritischen Einrichtung grundsätzlich erleichtert.

In einer bevorzugten Ausführung wird die Prüfung der Funktionstüchtigkeit nur zu Zeitpunkten durchgeführt, an denen nicht getaktet wird und Drehmomenterzeugung am Fahrzeug erlaubt ist. Eine Drehmomentbildung ist beispielsweise dann erlaubt, wenn ein Fahrbefehl oder eine Fahrinformation vorliegt, z.B. unmittelbar vor dem in Bewegung setzen des Schienenfahrzeugs.

Eine bevorzugte Ausführung der Erfindung ist dadurch gekennzeichnet, dass die Überprüfung der Funktionstüchtigkeit des zweiten Signalpfads immer dann ausgelöst wird, wenn der Zustand eines Signals des Schienenfahrzeugs, das zum Beispiel von geschlossenen Türkontakten oder anderen Sensoren des Schienenfahrzeugs ("Greenline") abgeleitet wird, sich ändert. Ein solcher Testzeitpunkt ist günstig, da bei geschlossenen Türkontakten eine Drehmomentbildung grundsätzlich erlaubt ist.

In einer anderen bevorzugten Ausführung erfolgt der Test dann, wenn der Fahrhebel (Master Control) vom Fahrzeugführer betätigt wird. Dies erfolgt immer beim Beschleunigen und beim Bremsen des Schienenfahrzeugs. Der Selbsttest wird daher entweder beim Anfahren und/oder quasi fortwährend bei Betrieb durchgeführt.

Es kann auch vorteilhaft sein, wenn der Selbsttest zudem auch unmittelbar bei der Inbetriebsetzung des Schienenfahrzeugs durchgeführt wird. Dadurch können gegebenenfalls vorliegende Funktionsstörungen bereits vor Antritt der Fahrt erkannt und gegebenenfalls beseitigt werden.

In einer besonders bevorzugten Ausführung ist vorgesehen, dass die Übertragung des Traktionssperre-Anforderungssignals nicht in einem Übertragungskanal, sondern in zwei örtlich voneinander getrennten Übertragungskanälen erfolgt. Jeder dieser Kanäle überträgt die gleiche Information und ist Gegenstand der Selbstüberprüfung. Durch diese redundante Signalübertragung erhöht sich die technische Zuverlässigkeit, denn bei Ausfall des einen Kanals, übernimmt der andere Kanal die Signalübertragung. Ist einer der Übertragungskanäle gestört, erkennt das System diesen Fehlerzustand. Es ist möglich diesen Fehlerzustand an den Führerstand oder an eine andere entfernt liegende Überwachungseinheit zu übertragen und beim nächsten Wartungsstillstand zu beheben.

### Kurzbeschreibung der Zeichnung

Zur weiteren Erläuterung der Erfindung wird im nachfolgenden Teil der Beschreibung auf die Zeichnungen Bezug genommen, aus denen weitere vorteilhafte Ausgestaltungen, Einzelheiten und Weiterbildungen der Erfindung anhand eines nicht einschränkenden Ausführungsbeispiels zu entnehmen sind.
Es zeigt:
- Figur 1: ein Blockschaltbild einer Antriebsteuerung eines Schienenfahrzeugs, in welchem ein erstes Ausführungsbeispiel einer durch Hardware realisierten Traktionssperre skizziert ist;
- Figur 2: eine zweites Ausführungsbeispiel einer Hardware-Traktionssperre.

### Ausführung der Erfindung

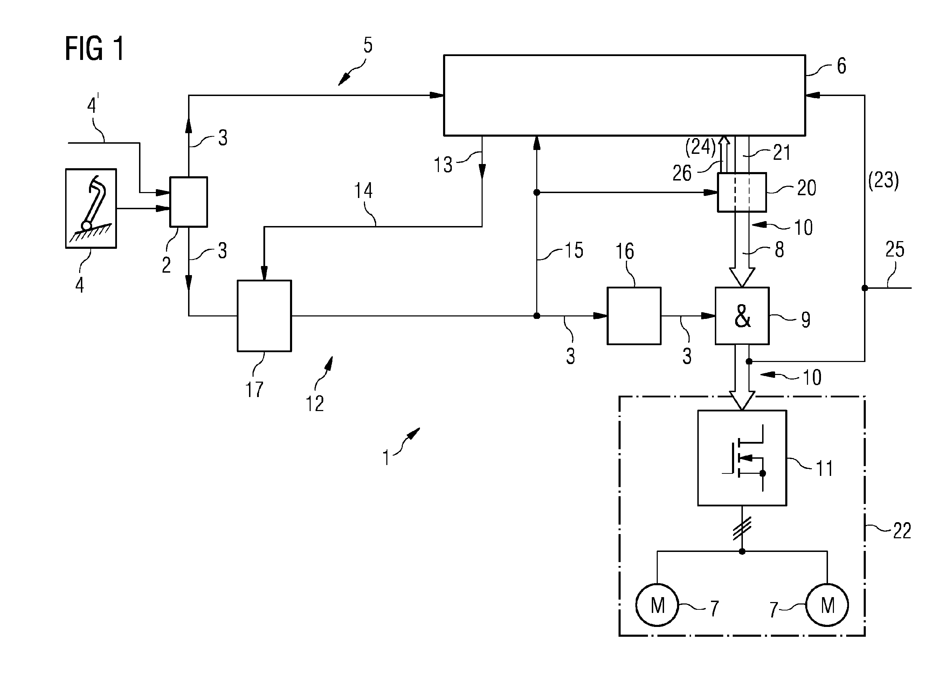

Die Figur 1 zeigt ein Blockschaltbild eines Ausschnitts einer Antriebsteuerung eines Schienenfahrzeugs mit einer in Hardware realisierten Traktionssperre 1. Eine solche Antriebsteuerung ist üblicherweise in einem Leitgerät des Schienenfahrzeugs untergebracht. Die Traktionssperre 1 besteht im Wesentlichen aus einem Selbsttestschalter 17, einem Signalpfad 12, einem Sperresignal-Rücklesekanal 15, einem Verzögerungsglied 16 und einer Ansteuersignal-Sperrschaltung 9. Die Antriebseinheit 22 besteht üblicherweise aus einem Stromrichter 11, der Elektromotoren 7 betreibt. Der Stromrichter 11 erhält dabei seine Ansteuersignale 8 über einen Ansteuersignalbus 10, welcher die Steuereinheit 6 und die Antriebseinheit 22 verbindet. Die Ansteuersignale 8 erzeugt üblicherweise ein Rechner, z.B. einem Mikrocomputer in der Steuereinheit 6.

Wie bereits eingangs dargestellt, kann der Wechselrichter 11 im Normalzustand durch die Software im Mikrorechner 6 gesperrt und auch freigegeben werden. Erfindungsgemäß kommt zu dieser Schutzmaßnahme eine durch Hardware realisierte elektronische Traktionssperre 1 hinzu, deren Funktion im Folgenden näher erläutert wird:
Der elektronischen Traktionssperre 1 wird ein in einer Einrichtung 2 erzeugtes Traktionssperre-Anforderungssignal 3 zugeführt. Diese Einrichtung 2 steht in einer Wirkverbindung mit dem Fahrhebel, der sich im Führerstand des Schienenfahrzeugs befindet und im Betriebsfall vom Fahrzeugführer manuell betätigt wird. Des Weiteren kann der Einheit 2 ein Signal 4' zugeführt sein, welches beispielsweise durch Abfrage von Türkontakten oder anderen Sensoren des Schienenfahrzeugs gewonnen wird. Beide Signale 4 und 4' repräsentieren einen "Fahrtbefehl" beziehungsweise eine "Fahrtfreigabeinformation"; beide lösen die Erzeugung eines Traktionssperre-Anforderungssignals 3 aus. Das Anforderungssignal 3 gelangt über einen ersten Signalpfad 5 zum Mikrorechner 6. Ein zweiter Signalpfad 12 leitet dieses Traktionssperre-Anforderungssignal 3 einer Ansteuersignal-Sperrschaltung 9 zu. Die Ansteuersignal-Sperrschaltung 9 liegt im Ansteuersignalpfad 10. Der Ansteuersignalpfad 10 dient zur Übertragung der vom Mikrorechner 6 erzeugten Ansteuersignalen 8 zum Stromrichter 11.

Die Ansteuersignal-Sperrschaltung 9 hat die Aufgabe, die Weiterleitung von Ansteuersignalen dann zu sperren, wenn diese von der Steuereinrichtung 6 fehlerhaft während eines Stillstands des Schienenfahrzeugs erzeugt werden. Die Ansteuersignal-Sperrschaltung 9 fungiert als logische Konjunktion, das heißt sie besteht im Wesentlichen aus UND-Gatter, denen eingangsseitig das Traktionssperre-Anforderungssignal 3 und die Ansteuersignale 8 zugeleitet sind. Bei der Zuleitung des Traktionssperre-Anforderungssignals 3 zur Ansteuersignal-Sperrschaltung 9 ist dieses durch das Verzögerungsglied 16 verzögert, was unten stehend näher erläutert wird.

Wie eingangs bereits dargestellt, kann der Signalpfad zu dieser Ansteuersignal-Sperrschaltung 9 gestört sein, so dass eine unerwünschte Drehmomentbildung nicht mit genügender Sicherheit ausgeschlossen werden kann. Im Sinne einer höheren technischen Zuverlässigkeit erfolgt daher eine fortwährende Überprüfung dieses Signalpfads 12. Dieser Selbsttest wird immer dann angestoßen, wenn sich das Traktionssperre-Anforderungssignal 3 ändert, z. B. wenn der Fahrhebel betätigt wird. Die Diagnoseeinrichtung besteht im Wesentlichen aus dem Mikrorechner 6, einer Testanforderungssignal-Zuleitung 14, einem Sperrsignal-Rücklesekanal 15, sowie einem Selbsttest-Schalter 17 und dem Verzögerungsbaustein 16, einem Rücklesekanal 25 der programmierbare logische Schaltung (FPGA) 20. Der FPGA-Baustein erhält die Ansteuersignale 8 von der Steuereinheit 6 über Busabschnitt 21. Der Selbsttest-Schalter 17 befindet sich dabei am Eingang des Übertragungskanals 12, das heißt in örtlicher Nähe der Erzeugung des Traktionssperre-Anforderungssignals 3, m. a. W. nahe zur Einheit 2. Der Verzögerungsbaustein 16 ist am anderen Ende des Signalpfads 12 angeordnet, das heißt in örtlicher Nähe zur Ansteuersignal-Sperrschaltung 9. Der Verzögerungsbaustein 16 ermöglicht die Speicherung beziehungsweise das Halten eines Signalwertes über ein vorgegebenes Zeitintervall.

Der Mikrocomputer 6 erzeugt zum Zwecke der Überprüfung bei jeder Änderung des Traktionssperre-Anforderungssignals 3 ein Testanforderungssignal 13. Dieses Testanforderungssignal 13 besteht darin, dass kurzzeitig zu Testzwecken eine "Sperranforderung" simuliert wird. Diese "Sperranforderung" gelangt über die Testanforderungssignal-Leitung 14 an den Selbsttest-Schalter 17. Der Selbsttest-Schalter 17 fungiert als testbarer Digital-Eingang, so dass bei einem funktionsfähigen Signalpfad 12 die simulierte "Sperranforderung" über die Sperrsignal-Rücklesekanal 15 zurück an den Mikrocomputer 6 geleitet wird.

Gleichzeitig wird dieses Testanforderungssignal 13 auch einem programmierbaren Logikbaustein 20 und dem Verzögerungsglied 16 zugeleitet. Der programmierbare Logikbaustein 20, z.B. ein FPGA-Baustein befindet sich am Ausgang der Steuereinheit 6 im Ansteuersignalpfad 10. Er sorgt dafür, dass die Selbsttests nur zu einem Zeitpunkt erfolgen dürfen, in welchem die korrekte Ansteuerung der Halbleitermodule im Stromrichter 11 nicht gefährdet ist. Die Ansteuersignal-Sperrschaltung 9 ist ebenfalls im Ansteuersignalpfad 10 angeordnet. Kommt es nun seitens des Mikrorechners 6 im Fehlerfall trotzdem zu einer Erzeugung von Ansteuersignalen 6, so gelangen diese zwar über den Abschnitt 21 des Signalpfads 10 zum FPGA 20, werden aber von dieser Schaltung entsprechend der Konfiguration des FPGA 20 so umgesetzt, dass die Halbleiterschalter im Wechselrichter 11 beim Abschalten der Phasen des Elektroantriebs 7 nicht beschädigt werden. Dadurch ist sichergestellt, dass bei der gewünschten Verhinderung der Drehmomentbildung der Stromrichter 11 nicht beschädigt wird. Sollte aber auch dieser programmierbare Logikbaustein 20 selbst fehlerhaft sein, so wirkt zeitlich verzögert die Ansteuersignal-Sperrschaltung 9 und bewirkt ein "hartes" Abschalten des Stromrichters 11. Die zeitliche Verzögerung ist durch das Zeitintervall (einige Millisekunden) des Verzögerungs-Bausteins 16 vorgegeben.

Mittels des Rücklesekanals 23 wird der Signalzustand am Eingang der Antriebseinheit 22 von der Steuereinheit 6 zurück gelesen. Ist das Rücklesesignal inaktiv, dann funktioniert die Traktionssperre 1. Im Fehlerfall wird der fehlerhafte Zustand dem Fahrzeugführer zur Anzeige gebracht.

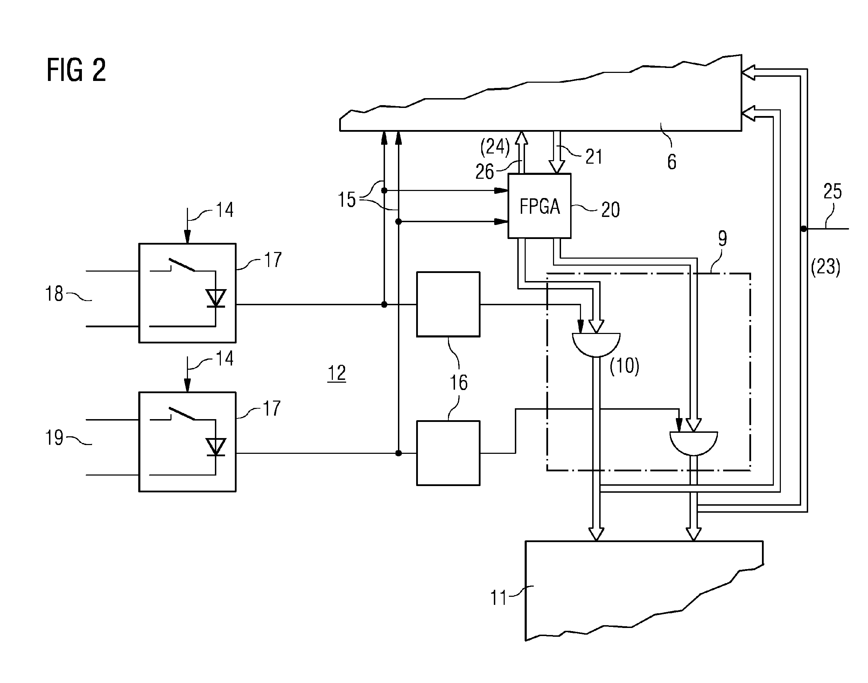

Die Figur 2 zeigt ein weiteres Ausführungsbeispiel, bei dem im Unterschied zu Figur 1 der zweite Signalpfad 12 aus zwei Kanälen gebildet ist, einem ersten Kanal 18 und einem zweiten Kanal 19. Jedem dieser beiden Kanäle 18, 19 wird das Traktionssperre-Anforderungssignal 3 jeweils über eine Stromschleife nach dem Ruherstromprinzip zugeführt. Der binäre Eingang ist jeweils in Serie zu dem Schalter 17' beziehungsweise 17" ausgeführt. Wie in der Figur 2 gezeichnet, ist jeder dieser Schalter 17', 17" durch das Testanforderungssignal 13, das heißt durch Software ansteuerbar. Der Selbsttest erfolgt wieder durch eine kurzzeitige Signal-Unterbrechung im Signalpfad 12. Auch hier wird das zurück gelesene Signal durch die Sperrsignal-Rücklesekanäle 15' beziehungsweise 15" sowohl dem FPGA-Baustein 20 als auch dem Verzögerungsglied 16' beziehungsweise 16" zugeleitet. Wie bereits unter Figur 1 ausgeführt, kommt auch hier im Fehlerfall des FPGA-Bausteins 20 die Ansteuersignal-Sperrschaltung 9 zur Wirkung, indem sie nach einer vorgegebenen Zeitverzögerung den Stromrichter 11 "hart" weg schaltet. Um ein Höchstmaß an Sicherheit bei der Verhinderung einer Ruckbewegung zu erreichen, wird dabei bewusst in Kauf genommen, dass in diesem Fehlerzustand möglicherweise Halbleiterschalter im Stromrichter 11 beschädigt werden.

Mit der in Figur 2 dargestellten Variante, kann mit vergleichsweise geringem Aufwand eine Architektur realisiert werden, welche der Sicherheitsstufe SIL 4 der Norm EN50126 entspricht, gleichzeitig aber die Wahrscheinlichkeit, dass das System sich zum Zeitpunkt der Aufgabenerfüllung in einem funktionsfähigen Zustand angetroffen wird, hoch ist (Verfügbarkeit).

Wie aus dem oben gesagten hervorgeht, werden die Erhöhung der Zuverlässigkeit und der Schutz des Stromrichters 11 ausschließlich durch Hardware erreicht. Es ist nicht erforderlich, den Algorithmus im Mikrorechner 6 oder dessen Hardware zu ändern. Bei einer Fahrzeugzulassung ist daher die sicherheitstechnische Analyse der hinzugekommenen Baugruppen vergleichsweise einfach. Bei der Realisierung der erfindungsgemäßen Vorrichtung kann mit vergleichsweise geringem Aufwand eine Ausfallwahrscheinlichkeit von kleiner als 10⁻⁸ erreicht werden.

### Zusammenstellung der verwendeten Bezugszeichen

- 1: Traktionssperre
- 2: Einrichtung zum Erzeugen eines Traktionssperre-Anforderungssignals
- 3: Traktionssperre-Anforderungssignal
- 4, 4': Signal des Schienenfahrzeuges (zum Beispiel Fahrhebel oder Fahrtfreigabesignal "Greenline")
- 5: erster Signalpfad
- 6: Steuereinheit des Schienenfahrzeugs
- 7: Elektromotor
- 8: Ansteuersignal
- 9: Ansteuersignal-Sperrschaltung
- 10: Ansteuersignalpfad
- 11: Stromrichter
- 12: zweiter Signalpfad
- 13: Testanforderungssignal
- 14, 14', 14": Testanforderungssignal-Zuleitung
- 15, 15', 15": Sperrsignal-Rücklesekanal
- 16, 16', 16": Verzögerungsglied
- 17, 17', 17": Selbsttest-Schalter
- 18: erster Kanal
- 19: zweiter Kanal
- 20: programmierbare logische Schaltung (FPGA)
- 21: Abschnitt von 10
- 22: Antriebseinheit
- 23: Rücklesekanal der Ansteuerung
- 24: Rücklesekanal programmierbare logische Schaltung (FPGA)
- 25: Rücklesesignal der Ansteuerung
- 26: Rücklesesignal programmierbare logische Schaltung

## Patentansprüche

1. Verfahren zum Sperren der Traktion eines stillstehenden Schienenfahrzeugs,
wobei die Traktionssperre (1) eine Ansteuersignal-Sperrschaltung (9) aufweist, die in einem Ansteuersignalpfad (10) angeordnet ist, der eine Steuereinheit (6) mit einer Antriebseinheit (22) verbindet,
wobei die Steuereinheit (6) in Abhängigkeit eines von einer Einrichtung (2) erzeugten und über einen ersten Signalpfad (5) empfangenen Traktionssperre-Anforderungssignals (3) ein Testanforderungssignal (13) erzeugt, welches über einen zweiten Signalpfad (12) einerseits einer in einem die Steuereinheit (6) und die Ansteuersignal-Sperrschaltung (9) verbindenden Abschnitt des Ansteuersignalpfads (10) angeordneten frei programmierbaren Schaltung (20) und andererseits mittels eines Verzögerungsgliedes (16) zeitlich verzögert der Ansteuersignal-Sperrschaltung (9) zugeleitet wird,
wobei mittels eines Rücklesekanals (23) der Signalzustand eines zwischen der Ansteuersignal-Sperrschaltung (9) und der Antriebseinheit (22) gelegenen Abschnittes des Ansteuersignalpfads (10) von der Steuereinheit (6) zurück gelesen wird, und
wobei die frei programmierbare Schaltung (20) dazu eingerichtet ist, bei Vorliegen eines Traktionssperre-Anforderungssignals (3) von der Steuereinheit (6) erzeugte Ansteuersignale (8) so zu sperren, dass die Antriebseinheit (22) nicht beschädigt wird.

2. Verfahren nach Anspruch 1, **dadurch gekennzeichnet, dass** die Prüfung der Funktionstüchtigkeit des zweiten Signalpfades (12) nur zu Zeitpunkten durchgeführt wird, an denen nicht getaktet wird und Drehmomenterzeugung der Motoren (7) der Antriebseinheit (22) erlaubt ist.

3. Verfahren nach Anspruch 1, **dadurch gekennzeichnet, dass** die Einrichtung (2) mit einem Signal (4') des Schienenfahrzeuges in einer Wirkverbindung steht und die Überprüfung der Funktionstüchtigkeit des zweiten Signalpfades (12) immer dann angestoßen wird, wenn der Signalzustand des Signals (4') geändert wird.

4. Verfahren nach Anspruch 1, **dadurch gekennzeichnet, dass** die Einrichtung (2) mit einem Fahrhebel des Schienenfahrzeugs in einer Wirkverbindung steht und die Überprüfung der Funktionstüchtigkeit des zweiten Signalpfades (12) immer dann angestoßen wird, wenn der Fahrhebel betätigt wird.

5. Verfahren nach Anspruch 1 oder 2, **dadurch gekennzeichnet, dass** die Überprüfung der Funktionstüchtigkeit des zweiten Signalpfades (12) bei der Inbetriebnahme des Schienenfahrzeugs durchgeführt wird.

6. Verfahren nach einem der Ansprüche 1 bis 5, **dadurch gekennzeichnet, dass** der zweite Signalpfad (12) aus einem ersten Leitungskanal (18) und aus einem vom ersten Leitungskanal (18) örtlich getrennten zweiten Leitungskanal (19) gebildet wird.

7. Verfahren nach Anspruch 6, **dadurch gekennzeichnet, dass** jedem dieser Leitungskanäle (18, 19) zum Zwecke der Funktionsüberprüfung eingangsseitig über eine Zuleitung (14', 14") das Testanforderungssignal (13) der Steuereinheit (6) zugeführt und ausgangsseitig über eine Rücklesekanal (24), der die programmierbare logische Schaltung (20) mit der Steuereinheit (6) verbindet, ein Rücklese-Signal (26) zurück gelesen wird.

8. Verfahren nach Anspruch 7, **dadurch gekennzeichnet, dass** jedem dieser Leitungskanäle (18, 19) zum Zwecke der Funktionsüberprüfung eingangsseitig über die Zuleitung (14', 14") das Testanforderungssignal (13) der Steuereinheit (6) zugeführt und ausgangsseitig über eine Sperrsignal-Rücklesekanal (15', 15") wiederum in die Steuereinheit (6) zurück gelesen wird.

9. Vorrichtung zum Sperren der Traktion eines stillstehenden Schienenfahrzeugs, umfassend:
- eine Einrichtung (2) zum Erzeugen eines Traktionssperre-Anforderungssignals (3);
- einen ersten Signalpfad (5), um das Traktionssperre-Anforderungssignal (3) an eine Steuereinheit (6) des Schienenfahrzeugs zu übermitteln,
- einen zweiten Signalpfad (12),
**dadurch gekennzeichnet,**
- **dass** eine Diagnoseeinrichtung (6, 14, 15, 17, 23, 24) vorgesehen ist, so dass der zweite Signalpfad (12) mittels eines von der Steuereinheit (6) erzeugten Testanforderungssignals (13) auf Funktionstüchtigkeit überprüfbar ist, indem das Testanforderungssignal (13) über den zweiten Signalpfad (12) einerseits einer frei programmierbaren Schaltung (20) und andererseits mittels eines Verzögerungsgliedes (16) zeitlich verzögert einer Ansteuersignal-Sperrschaltung (9) zugeleitet ist, wobei die programmierbare Schaltung (20) und die Ansteuersignal-Sperrschaltung (9) in einem die Steuereinheit (6) mit der Antriebseinheit (22) verbindenden Ansteuersignalpfad (10) angeordnet sind,
wobei mittels eines Rücklesekanals (23) der Signalzustand eines zwischen der Ansteuersignal-Sperrschaltung (9) und der Antriebseinheit (22) gelegenen Abschnittes des Ansteuersignalpfads (10) von der Steuereinheit (6) zurück lesbar ist, und
wobei die programmierbare logische Schaltung dazu eingerichtet ist, bei Vorliegen des Traktionssperre-Anforderungssignals (3) von der Steuereinheit (6) erzeugte Ansteuersignale (8) so zu sperren, dass die Antriebseinheit (22) nicht beschädigt wird.

10. Vorrichtung nach Anspruch 9, **dadurch gekennzeichnet, dass** der Einheit (2) ein Signal (4') des Schienenfahrzeugs zugeleitet ist, und dass eine Überprüfung auf Funktionstüchtigkeit durch Erzeugen eines Traktionssperre-Anforderungssignals (3) immer dann angestoßen wird, wenn das Signal (4') aktiv wird.

11. Vorrichtung nach Anspruch 9, **dadurch gekennzeichnet, dass** die Einheit (2) mit einem Fahrhebel des Schienenfahrzeugs in einer Wirkverbindung steht und eine Betätigung des Fahrhebels das Erzeugen eines Traktionssperre-Anforderungssignals (3) bewirkt.

12. Vorrichtung nach Anspruch 9, **dadurch gekennzeichnet, dass** der zweite Signalpfad (12) aus einem ersten Leitungskanal (18) und aus einem von diesem örtlich getrennten zweiten Leitungskanal (19) gebildet wird, und dass jeder dieser Leitungskanäle (18, 19) mittels der Diagnoseeinrichtung (6, 14, 15, 17, 23, 24) überprüfbar ist.

13. Vorrichtung nach Anspruch 9, **dadurch gekennzeichnet, dass** die Diagnoseeinrichtung (6, 14, 15, 17, 23, 24) zumindest teilweise in einem Leitgerät des Schienenfahrzeugs implementiert ist, und zum Zweck der Funktionsprüfung das Traktionssperre-Anforderungssignal (3) dem zweiten Signalpfad (12) eingangsseitig jeweils über eine Testanforderungssignal-Zuleitung (14', 14") zuführbar ist und ausgangsseitig jeweils über einen Sperrsignal-Rücklesekanal (15', 15") und über einen Rücklesekanal (24) der programmierbaren logischen Schaltung (20), auch FPGA genannt, rücklesbar ist.

14. Vorrichtung nach Anspruch 13, **dadurch gekennzeichnet, dass** in jedem der beiden Leitungskanäle (18, 19) an einem zur Ansteuersignal-Sperrschaltung (9) liegenden Ende jeweils ein Verzögerungsglied (16', 16") angeordnet ist, mit welchem eine Verzögerung der Signalweiterleitung an die Ansteuersignal-Sperrschaltung (9) möglich ist.

## Claims

1. Method for blocking the traction of a stationary rail vehicle,
wherein the traction blocking (1) has an activation signal blocking circuit (9) which is disposed in an activation signal path (10) which connects a control unit (6) to a drive unit (22),
wherein the control unit (6), as a function of a traction blocking request signal (3) created by a device (2) and received via a first signal path (5), creates a test request signal (13), which is conveyed via a second signal path (12) on the one hand to a freely-programmable circuit (20) disposed in a section of the activation signal path (10) connecting the control unit (6) and the activation signal blocking circuit (9) and on the other hand by means of a delay element (16) with a time delay to the activation signal blocking circuit (9),
wherein by means of a read-back channel (23) the signal state of a section of the activation signal path (10) located between the activation signal blocking circuit (9) and the drive unit (22) is read back by the control unit (6), and
wherein the freely-programmable circuit (20) is configured, if a traction blocking request signal (3) is present, to block activation signals (8) created by the control unit (6) so that the drive unit (22) is not damaged.

2. Method according to claim 1, **characterised in that** the checking of the correct functioning of the second signal path (12) is only carried out at times at which there is no clocking and torque creation of the motors (7) of the drive unit (22) is allowed.

3. Method according to claim 1, **characterised in that** the device (2) has an active connection to a signal (4') of the rail vehicle and the checking of the correct functioning of the second signal path (12) is always initiated when the signal state of the signal (4') is changed.

4. Method according to claim 1, **characterised in that** the device (2) has an active connection to a drive lever of the rail vehicle and the checking of the correct functioning of the second signal path (12) is always initiated when the drive lever is actuated.

5. Method according to claim 1 or 2, **characterised in that** the checking of the proper functioning of the second signal path (12) is carried out during the commissioning of the rail vehicle.

6. Method according to one of claims 1 to 5, **characterised in that** the second signal path (12) is formed by a first line channel (18) and by a second line channel (19) spatially separated from the first line channel (18).

7. Method according to claim 6, **characterised in that** each of these line channels (18, 19), for the purposes of function checking, is fed via a feed line (14', 14") with the test request signal (13) of the control unit (6) and on the output side a read-back signal (26) is read back via a read-back channel (24) which connects the programmable logic circuit (20) to the control unit (6).

8. Method according to claim 7, **characterised in that** each of these line channels (18, 19), for the purposes of function checking, is fed on the input side via the feed line (14', 14'') with the test request signal (13) of the control unit (6) and on the output side the signal is read back via a blocking signal read-back channel (15', 15'') again into the control unit (6).

9. A method for blocking the traction of a stationary rail vehicle, comprising:
- a device (2) for creating a traction blocking request signal (3);
- a first signal path (5) to transfer the traction blocking request signal (3) to a control unit (6) of the rail vehicle,
- a second signal path (12),
**characterised in that**,
- a diagnostic device (6, 14, 15, 17, 23, 24) is provided so that the second signal path (12) is able to be checked for correct functioning by means of a test request signal (13) created by the control unit (6), **in that** the test request signal (13) is fed via the second signal path (12) on the one hand to a freely-programmable circuit (20) and on the other hand is conveyed by means of a delay element (16) with a time delay to an activation signal blocking circuit (9), wherein the programmable circuit (20) and the activation blocking circuit (9) are disposed in an activation signal path (10) connecting the control unit (6) with the drive unit (22),
wherein, by means of a read-back signal (23) the signal status of a section of the activation signal path (10) located between the activation signal blocking circuit (9) and the drive unit (22) is able to be read back by the control unit (6), and
wherein the programmable logic circuit is configured, if the traction blocking request signal (3) is present, to block activation signals (8) created by the control unit (6) so that the drive unit (22) is not damaged.

10. Device according to claim 9, **characterised in that** a signal (4') of the rail vehicle is fed to the unit (2) and that a check on the proper functioning by creating a traction blocking request signal (3) is always initiated if the signal (4') becomes active.

11. Device according to claim 9, **characterised in that** the unit (2) is actively connected to a driving lever of the rail vehicle and an actuation of the driving lever causes a traction blocking request signal (3) to be created.

12. Device according to claim 9, **characterised in that** the second signal path (12) is formed from a first line channel (18) and from a second line channel (19) spatially separated therefrom, and that each of these line channels (18, 19) is able to be checked by means of the diagnostic device (6, 14, 15, 17, 23, 24).

13. Device according to claim 9, **characterised in that** the diagnostic device (6, 14, 15, 17, 23, 24) is implemented at least partly in a control device of the rail vehicle and for the purposes of functional checking the traction blocking request signal (3) is able to be fed to the second signal path (12) on the input side in each case via a test request signal feed line (14', 14'') and on the output side is able to be read back in each case via a blocking signal read-back channel (15', 15'') and via a read-back channel (24) of the programmable logic circuit (20), also called an FPGA.

14. Device according to claim 13, **characterised in that**, in each of the two line channels (18, 19) at an end lying towards the activation signal blocking circuit (9), a delay element (16', 16'') is disposed, with which a delay in forwarding the signal to the activation signal blocking circuit (9) is possible.

## Revendications

1. Procédé pour le blocage de la traction d'un véhicule ferroviaire à l'arrêt,
dans lequel le blocage de la traction (1) comporte un circuit de blocage du signal de commande (9) qui est disposé dans un trajet de signal de commande (10) qui relie une unité de commande (6) à une unité d'entraînement (22), dans lequel l'unité de commande (6) produit, en réponse à un signal de demande de blocage de la traction (3) produit par un appareillage (2) et reçu par un premier trajet de signal (5), un signal de demande de test (13), lequel est amené, par un deuxième trajet de signal (12), d'une part à un circuit librement programmable (20) disposé dans une section du trajet de signal de commande (10) reliant l'unité de commande (6) et le circuit de blocage du signal de commande (9), et d'autre part est amené au circuit de blocage du signal de commande (9) en étant retardé dans le temps au moyen d'un élément de retardement (16),
dans lequel, au moyen d'un canal de lecture en retour (23), on effectue par l'unité de commande (6) une lecture en retour de l'état du signal d'une section du trajet de signal de commande (10) située entre le circuit de blocage du signal de commande (9) et l'unité d'entraînement (22), et
dans lequel le circuit librement programmable (20) est conçu de manière à bloquer des signaux de commande (8) produits par l'unité de commande (6) en présence d'un signal de demande de blocage de la traction (3), de sorte que l'unité d'entraînement (22) ne soit pas endommagée.

2. Procédé selon la revendication 1, **caractérisé en ce que** la vérification de la fonctionnalité du deuxième trajet de signal (12) est exécutée seulement aux instants auxquels il n'y a pas de cadencement et où la production du couple des moteurs (7) de l'unité d'entraînement (22) est autorisée.

3. Procédé selon la revendication 1, **caractérisé en ce que** l'appareillage (2) est en liaison fonctionnelle avec un signal (4') du véhicule ferroviaire, et le contrôle de la fonctionnalité du deuxième trajet de signal (12) est toujours déclenché quand l'état de signal du signal (4') est modifié.

4. Procédé selon la revendication 1, **caractérisé en ce que** l'appareillage (2) est en liaison fonctionnelle avec un levier de conduite du véhicule ferroviaire, et le contrôle de la fonctionnalité du deuxième trajet de signal (12) est toujours déclenché quand le levier de conduite est actionné.

5. Procédé selon la revendication 1 ou 2, **caractérisé en ce que** le contrôle de la fonctionnalité du deuxième trajet de signal (12) est effectué lors de la mise en service du véhicule ferroviaire.

6. Procédé selon l'une des revendications 1 à 5, **caractérisé en ce que** le deuxième trajet de signal (12) est constitué d'un premier canal conducteur (18) et d'un deuxième canal conducteur (19) spatialement séparé du premier canal conducteur (18).

7. Procédé selon la revendication 6, **caractérisé en ce qu'**en vue du contrôle de la fonctionnalité, le signal de demande de test (13) de l'unité de commande (6) est guidé du côté de l'entrée par un conducteur (14', 14'') à chacun de ces canaux conducteurs (18, 19), et du côté de la sortie un signal de lecture en retour (26) est lu en retour par un canal de lecture en retour (24) qui relie le circuit logique programmable (20) à l'unité de commande (6).

8. Procédé selon la revendication 7, **caractérisé en ce qu'**en vue du contrôle de la fonctionnalité, le signal de demande de test (13) de l'unité de commande (6) est guidé du côté de l'entrée par le conducteur (14', 14'') à chacun de ces canaux conducteurs (18, 19), et du côté de la sortie est lu à nouveau en retour dans l'unité de commande (6) par un canal de lecture en retour de signal de blocage (15', 15'').

9. Dispositif pour le blocage de la traction d'un véhicule ferroviaire à l'arrêt, comprenant :
- un appareillage (2) pour la production d'un signal de demande de blocage de la traction (3) ;
- un premier trajet de signal (5) pour transmettre le signal de demande de blocage de la traction (3) à une unité de commande (6) du véhicule ferroviaire,
- un deuxième trajet de signal (12),
**caractérisé en ce**
- **qu'**il est prévu un appareillage de diagnostic (6, 14, 15, 17, 23, 24) de sorte que le deuxième trajet de signal (12) puisse être contrôlé quant à la fonctionnalité au moyen d'un signal de demande de test (13) produit par l'unité de commande (6), dans lequel le signal de demande de test (13) est amené par le deuxième trajet de signal (12), d'une part à un circuit librement programmable (20) et d'autre part à un circuit de blocage du signal de commande (9) en étant retardé dans le temps au moyen d'un élément de retardement (16), le circuit programmable (20) et le circuit de blocage du signal de commande (9) étant disposés dans un trajet de signal de commande (10) reliant l'unité de commande(6) à l'unité d'entraînement (22),
dans lequel, au moyen d'un canal de lecture en retour (23), l'unité de commande (6) peut lire en retour l'état du signal d'une section du trajet de signal de commande (10) située entre le circuit de blocage du signal de commande (9) et l'unité d'entraînement (22), et
dans lequel le circuit logique programmable est conçu de manière à bloquer des signaux de commande (8) produits par l'unité de commande (6) en présence du signal de demande de blocage de la traction (3), de sorte que l'unité d'entraînement (22) ne soit pas endommagée.

10. Dispositif selon la revendication 9, **caractérisé en ce qu'**un signal (4') du véhicule ferroviaire est amené à l'unité (2) et **en ce qu'**un contrôle de la fonctionnalité par production d'un signal de demande de blocage de la traction (3) est toujours déclenché quand le signal (4') est activé.

11. Dispositif selon la revendication 9, **caractérisé en ce que** l'unité (2) est en relation fonctionnelle avec un levier de conduite du véhicule ferroviaire, et qu'un actionnement du levier de conduite entraîne la production d'un signal de demande de blocage de la traction (3).

12. Dispositif selon la revendication 9, **caractérisé en ce que** le deuxième trajet de signal (12) est constitué d'un premier canal conducteur (18) et d'un deuxième canal conducteur (19) spatialement séparé du premier, et **en ce que** chacun de ces canaux conducteurs (18, 19) peut être contrôlé au moyen de l'appareillage de diagnostic (6, 14, 15, 17, 23, 24).

13. Dispositif selon la revendication 9, **caractérisé en ce que** l'appareillage de diagnostic (6, 14, 15, 17, 23, 24) est au moins en partie implanté dans un appareil de conduite du véhicule ferroviaire, et qu'en vue du contrôle de la fonctionnalité, le signal de demande de blocage de la traction (3) peut être dirigé vers le deuxième trajet de signal (12) du côté de l'entrée à chaque fois par un conducteur du signal de demande de test (14', 14"), et du côté de la sortie à chaque fois par un canal de lecture en retour de signal de blocage (15', 15''), et peut être lu en retour par un canal de lecture en retour (24) du circuit logique programmable (20) aussi appelé FPGA.

14. Dispositif selon la revendication 13, **caractérisé en ce que** dans chacun des deux canaux conducteurs (18, 19) est disposé à chaque fois un élément de retardement (16', 16'') à une extrémité située sur le circuit de blocage du signal de commande (9), avec lequel est rendu possible un retard de la transmission du signal au circuit de blocage du signal de commande (9).
